(19)

Europäisches
Patentamt
European
Patent Office
Office européen
des brevets

(11) **EP 4 283 510 A1**

(12) **EUROPEAN PATENT APPLICATION**

(43) Date of publication:
**29.11.2023 Bulletin 2023/48**

(21) Application number: **22305786.0**

(22) Date of filing: **28.05.2022**

(51) International Patent Classification (IPC):
**G06F 30/10** (2020.01)     **G06F 30/20** (2020.01)
**G06F 113/24** (2020.01)     **G06F 30/15** (2020.01)
**G06F 30/17** (2020.01)

(52) Cooperative Patent Classification (CPC):
**G06F 30/10; G06F 30/20;** G06F 30/15; G06F 30/17;
G06F 2113/24

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **CLAUSEN, Peter
  Karlsruhe (DE)**
• **SCHMIDT, Martin-Pierre
  Vélizy-Villacoublay (FR)**
• **PEDERSEN, Claus Bech Wittendorf
  Hamburg (DE)**
• **HEBRARD, Pascal
  Vélizy-Villacoublay (FR)**

(74) Representative: **Bandpay & Greuter
  30, rue Notre-Dame des Victoires
  75002 Paris (FR)**

(54) **DESIGNING A SHEET PART COMPRISING BEADS**

(57)     The disclosure notably relates to a computer-implemented method for designing a sheet part comprising beads. The method comprises providing a CAD model representing the part. The CAD model includes a feature tree. The feature tree has one or more CAD parameters each having an initial value. The method further comprises providing a bead optimization program specified by one or more use and/or manufacturing performance indicators. The one or more indicators comprise one or more objective function(s) and/or one or more constraints. The method further comprises modifying the initial values of the one or more CAD parameters by solving the optimization program using a gradient-based bead optimization method. The optimization method has as free variables the one or more CAD parameters. The optimization method uses sensitivities. Each sensitivity is an approximation of a respective derivative of a respective performance indicator with respect to a respective CAD parameter.

EP 4 283 510 A1

**Description**

**TECHNICAL FIELD**

The disclosure relates to the field of computer programs and systems, and more specifically to a method, system and program for designing a sheet part comprising beads.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA, SIMULIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. Altogether, the system delivers an open object model linking products, processes, resources to enable dynamic, knowledge-based product creation and decision support that drives optimized product definition, manufacturing preparation, production and service.

Within this context, there is still a need for an improved method for designing a sheet part comprising beads.

**SUMMARY**

It is therefore provided a computer-implemented method for designing a sheet part comprising beads. The method comprises providing a CAD model representing the part. The CAD model includes a feature tree. The feature tree has one or more CAD parameters each having an initial value. The method further comprises providing a bead optimization program specified by one or more use and/or manufacturing performance indicators. The one or more indicators comprise one or more objective function(s) and/or one or more constraints. The method further comprises modifying the initial values of the one or more CAD parameters by solving the optimization program using a gradient-based bead optimization method. The optimization method has as free variables the one or more CAD parameters. The optimization method uses sensitivities. Each sensitivity is an approximation of a respective derivative of a respective performance indicator with respect to a respective CAD parameter.

The method may comprise one or more of the following:

-   the sensitivities are compositions of:

    ◦ approximated respective derivatives each of a respective performance indicator with respect to a bead pattern nodal positions of a shell mesh of the part,
    ◦ approximated respective derivatives each of the nodal positions with respect to a geodesic signed distance field on the part, the geodesic signed distance field being a distribution of geodesic signed distances of nodes to the bead pattern on the part, and
    ◦ approximated respective derivatives each of the geodesic signed distance field with respect to a respective CAD parameter of a CAD definition of the bead pattern of the part;

-   the nodal positions correspond to a translation of the nodes of the shell mesh by a vector field that corresponds to the normals of the nodes multiplied by a bead scaling which depends on the geodesic signed distance field;
-   the bead scaling is based on a projection by a smooth and differentiable function mapping $\mathbb{R}$ onto $[0,1]$;
-   the nodal positions $X(r_m)$ are defined by the following formula:

$$X(r_m) = X_0 + h(b_h, b_w, r_m)n = X_0 + b_h h\left(\frac{b_w - GSDF(r_m)}{2b_w}\right)n$$

where *GSDF* is the geodesic signed distance field, $r_m$ is a parameterization of the bead pattern on the mesh, $b_h$ is a height of the bead, $b_w$ is a width of the bead, h is the smooth and differentiable function mapping $\mathbb{R}$ onto [0,1], $X_0$ represents the positions of the nodes of the shell mesh, and n represents the normals of these nodes;

- h is a smooth Heaviside function;

- each respective approximated derivative $\dfrac{\delta GSDF_i}{\delta r_m}$ of the geodesic signed distance field with respect to a respective CAD parameter $r_m$ is of the type:

$$\frac{\delta GSDF_i}{\delta r_m} \cong \frac{GSDF_i(r_m + h_m) - GSDF_i(r_m - h_m)}{2h_m},$$

$\forall i \in \omega, m \in \Omega_{param},$
where $GSDF_i$ is the geodesic signed distance field for mesh node position i, where $\Omega_{param}$ is a set of the CAD parameters, and where $h_m > 0$ is a small perturbation;

- each sensitivity $\dfrac{\delta KPI_n}{\delta r_m}$ is of the type:

$$\frac{\delta KPI_n}{\delta r_m} = \sum_{i \in \omega} \frac{\delta KPI_n}{\delta X_i} \frac{\delta X_i}{\delta GSDF_i} \frac{\delta GSDF_i}{\delta r_m},$$

$\forall n \in \Omega_{score}, m \in \Omega_{param}$ where $GSDF_i$ is the signed distance field for mesh node position i, where $\Omega_{param}$ is a set of the CAD parameters, where $r_m$ is the respective CAD parameter, where $X_i$ is the mesh node position i, where $KPI_n$ is the respective performance indicator, and where $\Omega_{score}$ is the set of performance indicators;
- the method comprises, prior to solving the optimization program, computing the sensitivities; and/or
- the sheet part is a curved sheet part.

It is further provided a computer program comprising instructions for performing the method.
It is further provided a computer readable storage medium having recorded thereon the computer program.
It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG.s 1 to 21 illustrate the method; and

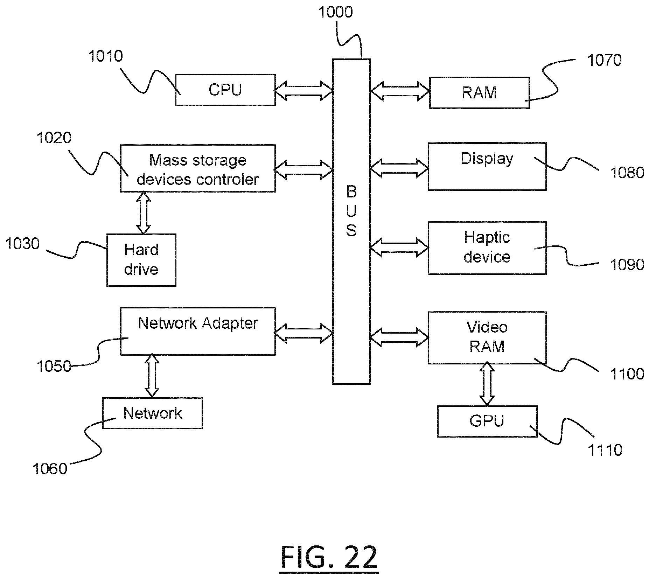

- FIG. 22 shows an example of the system.

**DETAILED DESCRIPTION**

It is therefore provided a computer-implemented method for designing a sheet part comprising beads. The method comprises providing a CAD model representing the part. The CAD model includes a feature tree. The feature tree has one or more CAD parameters each having an initial value. The method further comprises providing a bead optimization program specified by one or more use and/or manufacturing performance indicators. The one or more indicators comprise one or more objective function(s) and/or one or more constraints. The method further comprises modifying the initial values of the one or more CAD parameters by solving the optimization program using a gradient-based bead optimization method. The optimization method has as free variables the one or more CAD parameters. The optimization method uses sensitivities. Each sensitivity is an approximation of a respective derivative of a respective performance indicator with respect to a respective CAD parameter.
This forms an improved method for designing a sheet part comprising beads.
Notably, the method optimizes one or more performance indicators of the provided CAD model, which corresponds to one or more performance indicators of the sheet part comprising beads. The method does so by solving a bead optimization program using an bead optimization method which has the CAD parameters of the CAD model as free variable, and thus which acts on these parameters for the optimization, to find or tend to find the optimal parameters. The method thus optimizes directly a CAD model including a feature tree representation of a sheet part comprising beads. The method thereby allows to optimize directly the CAD parameters, such that the resulting optimized model is automatically an exact CAD representation of the bead pattern. There is thus no need for reinterpretation of an optimized CAE model back into CAD, which may be a time-consuming and error prone manual step. Furthermore, the bead optimization method used by the method is a gradient-based bead optimization method, which is an efficient (in terms of computation times and use of CPU and/or memory resources) optimization method that allows to handle an optimization with many variables (here, many CAD parameters). The method enables to use such an efficient optimization method since the method uses the sensitivities, the sensitivities being approximations of derivatives of performance indicators with respect to CAD parameters (i.e. the free variables of the optimization). In other words, the method optimizes directly a CAD model, and with a gradient-based bead optimization, thus in an efficient manner.

The method thus links the performances indicators (also referred to as KPIs-Key Performance Indicators- of the design (e.g. physical and/or geometrical objectives and/or constraints)) with the design variables to be optimized (i.e. the CAD parameters). The method allows to perform the optimization with respect to any CAD parameter or set of CAD parameters, related to any possible CAD feature available in the CAD software, and in particular CAD parameters related to the beads (e.g. parameters describing a position and/or layout of the bead pattern). The method also allows to perform the optimization with respect to a high number of CAD parameters, since the use of a gradient-based optimization, made possible thanks to the sensitivities provided by the method, allows to handle such a high number while avoiding combinatorial explosion and exponentially increasing computational runtimes. Examples of the method discussed hereinafter provide a fast and robust manner to numerically but accurately approximate the derivatives of the KPIs with respect to the CAD parameters and thereby, enabling efficient gradient-based optimization of CAD models having many design variables. Analytically computing the derivatives of each KPI with respect to every possible type of CAD parameters is challenging. Moreover, CAD parameters can interact or even nullify each other in the CAD model causing the computation of analytical derivatives to be generally infeasible. Examples of the method discussed hereinafter allows to solve these problems.

The method allows optimizing directly a high-level CAD representation, meaning that the output optimized model is still a CAD model (contrary to e.g. Topology Optimization or other non-parametric optimization approaches). It uses highly efficient gradient-based optimization schemes to quickly converge to improved designs. Therefore, the method is faster for simple optimization problems but also have a significantly better numerical scaling in computational costs and thereby, allowing the optimization problem to have a much larger number of design variables (contrary to e.g. Trial-and-Error Parametric Design Optimization or other zero order optimization approaches).

The method allows controlling the "smoothness" of the optimization problem to efficiently navigate the feasible solution space.. The method is compatible with any real-valued CAD parameter without any additional implementation or interfacing effort with the CAD representation (contrary to e.g. Moving Morphable Components or similar approaches): as long as the high level design parameter modifies the geometry in some way, it should affect the intermediate implicit field (i.e. the geodesic signed distance field) and therefore, be captured by the calculated gradients. Numerically, the method is robust with respect to heterogeneous parameters and drastic changes in the geometry which are to be expected for CAD models of industrial design applications. The method is compatible with any existing KPI for which one can obtain the sensitivities used in the method, e.g. derivatives with respect to the low level variables of the intermediate implicit field (i.e. the geodesic signed distance field) in examples of the method. Therefore, the method's approach synergizes well with and benefits directly from already existing commercial components present in FEA software and optimization software packages such as Abaqus/Tosca.

The method is for designing a sheet part comprising beads. "Designing a part" designates any action or series of actions which is at least a part of a process of elaborating a modeled object (3D) of the part. In the case of the method, the method forms a design step that consists in the optimization of a CAD model (that provided as input to the method). The method outputs an optimized CAD model which may be the basis for a further use of the optimized model for manufacturing the sheet part. The method may thereby be included in a production process for producing the sheet part, as further discussed hereinafter.

The method comprises providing the CAD model representing the sheet part and the optimization program. The provided CAD model and the optimization program thus form inputs of the method. The provided CAD model may be referred to as "the input CAD model". The provided CAD model is a feature-based CAD model that includes a feature tree. The concept of feature-based CAD model is known *per* se from CAD and is further discussed hereinafter. Likewise, the concept of featuretree is well-known from CAD. The feature tree is a tree organization of CAD operations (e.g. including Boolean and non-Boolean operations) on CAD features that each model a portion of the part. More specifically, the feature tree is a directed acyclic graph (as discussed in https://en.wikipedia.org/wiki/Directed_acyclic_graph)that describes/captures the order of sequence and combination of the CAD operations. As known *per se* from CAD, a CAD feature includes shape/geometry information and parametric information for representing a portion of the part modeled/captured by the CAD feature. The CAD feature may as known comprise a definition/specification of a geometry/shape corresponding to the portion modeled by the CAD feature (e.g. a definition/specification geometric primitive) and one or more CAD parameters that specify the geometry and its topology. The feature tree thus includes one or more CAD parameters each being respective to a respective CAD feature of the feature tree. Each parameter of the input CAD model has an initial value, e.g. that may result from an earlier design process as discussed hereinafter. A key characteristic of a CAD model such as the one provided by the method is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context. The method relates to the physical and/or geometrical optimization of sheet parts with beads modeled by such CAD models.

The part represented by the CAD model is a sheet part. The sheet part is a thin mechanical part of which material is arranged as a thin plate which may be flat or curved. The sheet part may thus be a curved sheet part or a flat sheet part. A sheet part may form a component of a larger product. The sheet part may be a sheet metal part, which is a part formed by forming, by an industrial process (e.g. stamping or deep drawing), into a thin piece, that may be flat or curved. A sheet metal part can be bent and/or cut into a variety of shapes, depending on the industrial application. The thickness of such a part may be comprised between 0.5mm and 6mm. The sheet metal part may be a flat piece or a curved piece, for example a coiled strip, that may be formed by running a continuous sheet of metal through a roll stiller. The sheet metal part may be used in automobile in automobile/automotive and truck (lorry) bodies, airplane fuselages and wings, medical tables, roofs for buildings (architecture), and many other applications.

The sheet part comprises beads. A bead is a portion of the sheet part material (e.g. metal) that forms a protrusion on, or a depression in (depending on which side of the sheet part one looks), the part. Such portion has a rounded shape and may be formed by bending a sheet metal part. During the bending process, the outer surface of the sheet metal part is bent into a protrusion/depression into the cavity of the die and a bead or round cored is thereby formed on the sheet metal part. Such process is repeated to form several beads, for example arranged as a (e.g. regular) pattern, circular or rectangular. The beads impart stiffness to the part by increasing the moment of inertia of the part, and thereby improve the stiffness of the part. The beads may also improve other physical properties, such as thermal properties, fluid properties, EMAG (Structural Dynamics), and/or eigenfrequencies (NVH, *i.e.* Noise, Vibration, and Harshness). The beads of the part designed by the method may comprise beads forming a (e.g. regular/rectangular or circular) pattern of straight lines and/or beads forming other types of pattern.

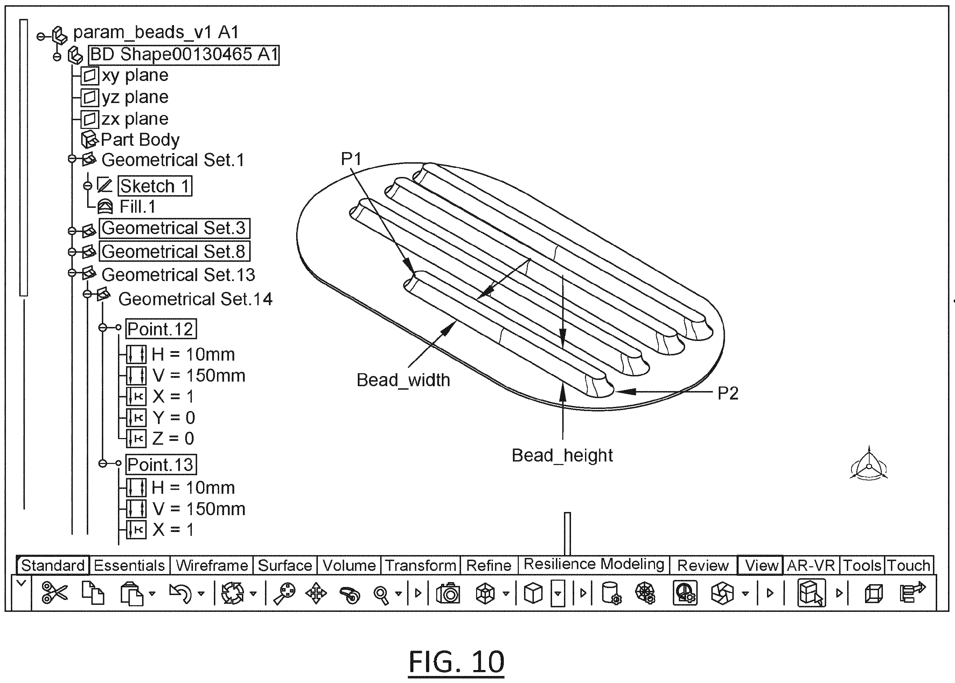

The CAD parameters of the provided CAD model's feature tree include parameters related to the beads of the designed sheet part, i.e. parameters describing the positioning and layout of the beads on the sheet part. These parameters may include, for each bead, the extremal points of the bead's midline (as illustrated for example on FIG. 10 which is discussed hereinafter). The optimization method may act only on these parameters, i.e. the optimization's free variables may consist in the collection of the beads' midline extremal points.

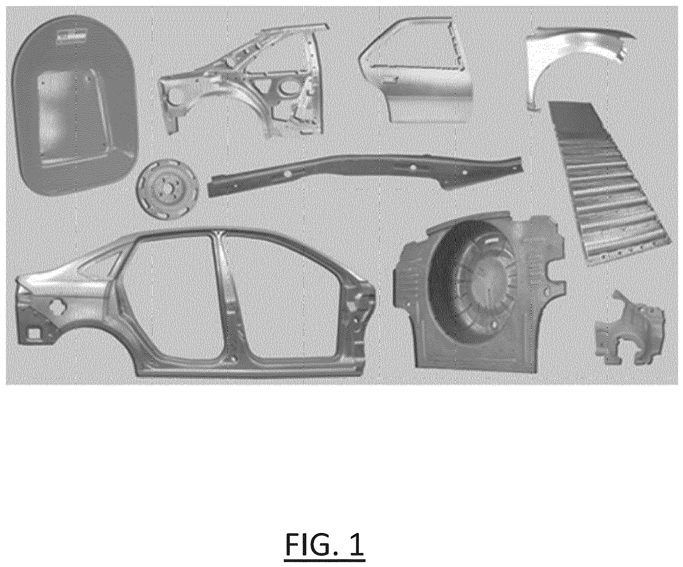

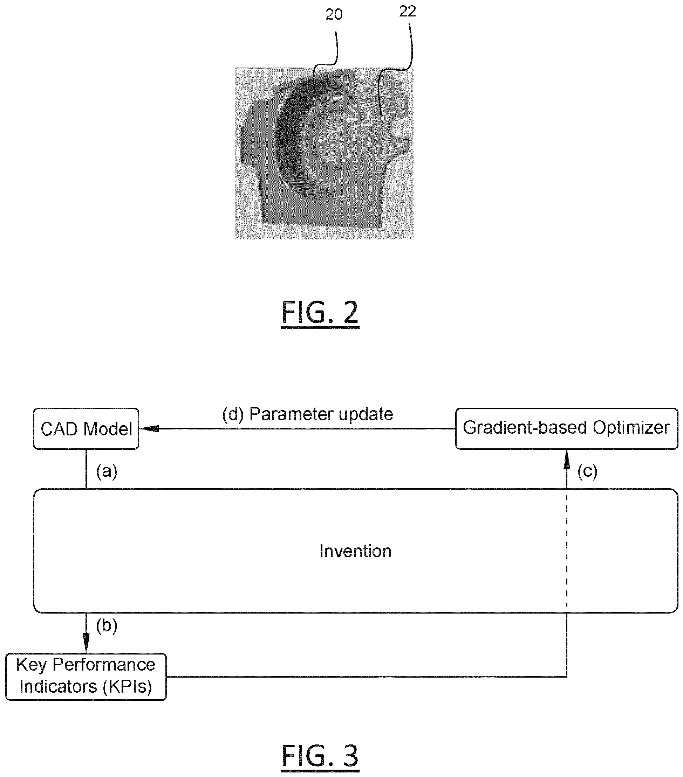

FIG. 1 shows a screenshot of examples of sheet metal parts with beads. FIG. 2 shows an example of a sheet metal part that comprises a circular pattern of beads 20 as well as a rectangular/linear pattern of beads 22.

The CAD model may be a 3D CAD model (i.e. forming a 3D CAD representation of the part). The CAD model may include, besides the feature tree, a 3D geometrical representation, for example a B-rep obtained by executing the feature tree. The geometrical representation includes a surface geometrical representation of the product.

The input CAD model may stem from a previous design process (e.g. performed on another system or software, e.g. during another design session). Providing the CAD model may comprise downloading the CAD model from a memory or server on which the CAD model has been stored further to its design. Alternatively, providing the CAD model may comprise designing the CAD model. Designing the CAD model may comprise designing the CAD model from scratch on a CAD system, e.g. by iteratively building the feature tree. Alternatively, designing the CAD model may comprise designing first a CAE model *(i.e.* a finite element model) representing the sheet part on a CAE system, using any CAE software solution, and converting the CAE model into a CAD model using any CAE-to-CAD conversion method, and optionally then storing the CAD model on a memory or server. Providing the CAD model may yet comprise downloading an already designed CAE model, e.g. from a memory or server on which the CAE model has been stored further to its design, and then converting the CAE model into the input CAE model.

Providing the bead optimization program may comprise downloading the optimization program from any memory or server where the program is available. Alternatively, providing the optimization program may comprise launching any software where the program is implemented. Yet alternatively, providing the optimization program may comprise coding/programming the optimization program or downloading (and optionally modifying) an already coded/programmed optimization program.

The bead optimization program comprises a bead optimization algorithm to solve a bead optimization problem. The bead optimization problem refers to a mathematical bead optimization problem that consist in minimizing or maximizing one or more objective functions related to the beads of the part (such as the part stiffness or eigenfrequencies, which are related to the presence and positioning of the beads), optionally under one or more constraints (e.g. a minimal and/or a maximal distance between the extremal points of the bead's midlines, a fixed bead width for all the beads and/or a fixed bead height for all the beads), or minimizing or maximizing any other quantity under the constraint(s). For example, the bead optimization may consist in changing the node position on the finite element shell of the part (as discussed hereinafter) to find the best position and geometry of the beads so as to optimize one or more performance indicators, for example to add stiffness or increasing eigenfrequencies (NVH) without adding substantial mass. This means that the optimization problem that the method solves (i.e. numerically) is an optimization problem that consists in optimizing the one or more objective functions, optionally under the one or more constraints, by finding the optimal positioning, shape, layout and/or pattern of the beads (i.e. that/shoes that optimize or tend to optimize the one or more function). The bead optimization program is thus specified by one or more use and/or manufacturing indicators that comprise the objective function(s) and/or the constraint(s). The optimization program comprises an optimization algorithm that performs such a minimization or maximization. The optimization program may be designed so that data about the optimization may be inputted by a user prior to launching the optimization program, said data including the objective function(s), the constraint(s), any convergence threshold, and/or any maximal value of iterations steps for the algorithm. The method may comprise a step of a user providing at least a part of such data, prior to the optimization step. The optimization program may also be designed so that a user may select an optimization method to perform the optimization. The method may comprise a step of a user selecting the optimization method. The selection of the optimization method may be constrained to a predefined list of optimization methods, i.e. the user may only select a method within this list. The list may consists in gradient-based bead optimization methods only, as the optimization method used by the method is a gradient-based optimization method. By "gradient-based bead optimization method", it is meant a gradient-based optimization method that is applied to (e.g. adapted to, formulated to be applied to) an optimization problem related to the beads. The concept of gradient-based optimization method, also referred to as "gradient method", is well known (see for example https://en.wikipedia.org/wiki/Gradient method). The gradient-based optimization method used by the method may be any one of the methods of the following list (which may form the previously-discussed list for a user-selection) applied to bead optimization: gradient descent, stochastic gradient descent, coordinate descent, Frank-Wolfe algorithm, Landweber iteration, random coordinate descent, conjugate gradient method, derivation of the conjugate gradient method, nonlinear conjugate gradient method, biconjugate gradient method, biconjugate gradient stabilized method, and Method of Moving Asymptotes (also referred to as MMA). "Bead optimization may also be referred to as "topography optimization or shape optimization". Bead optimization may also be referred to as shape optimization of thin walled structures in academia or topography optimization in other software (see for example https://www.sciencedirect.com/science/article/abs/pii/S0045782512001727 or https://altairuniver-sity.com/52523-what-is-topography-optimization/).

The one or more use and/or manufacturing performance indicators are data that define the underlying optimization problem, i.e. the optimization problem amounts to optimize the performances of the sheet part represented by the CAD model with respect to this/these performance indicator(s). A performance indicator is in other words data (e.g. a mathematical expression, such as a mathematical function or constraint (e.g. captured by an equation or a system of equations)) that measure a performance to be achieved and/or respected by the part represented by the CAD model. The performance is with respect to use and/or manufacturing, i.e. the performance is a physical performance (e.g. a behavior) of the part during use and/or during manufacturing, as the indicator is a use and/or manufacturing performance indicator. A performance of the product during use is a physical behavior of the part with respect to a given use of the part, such as a thermal behavior of the part, an aerodynamic behavior of the part, or a structural behavior of the part, e.g. when the part is subject to one or more loads (e.g. thermal forces, structural loads, inertial loads, or fluid flows). A performance of the part during manufacturing is a physical behavior of the part with respect to a given manufacturing process of the part, such as a compliance of the part with constraints of the manufacturing process and/or with specifications of a manufacturing tool carrying out the process.

The one or more indicators comprise one or more objective function. An objective function is herein a function of which value is to be optimized (i.e. minimized or maximized) by the optimization. The objective function measures a performance of the part with respect to use and/or manufacturing of the part, the function having as variable the CAD model or one or more CAD parameters. The function outputs a value that is large when the performance is achieved, in which case the function is to be maximized, or a value that is small when the performance is achieved, in which case the function is to be minimized.

The one or more indicators may additionally or alternatively comprise one or more constraints. A constraint is herein a mathematical expression (e.g. an equation or a set of equations, or a fixed value of a parameter) that is to be respected during the optimization. The constraint captures a performance that the part is to fulfill (that is, mandatorily), such as a prescribed total volume of material of the product. The optimization may optimize the objective function(s) under the constraint(s), i.e. the optimization aims at finding the variable values that optimize the objective functions) while fulfilling the constraint(s).

The one or more performance indicators may include one or more of the following: displacement components, displacement magnitude, rotation components, rotation magnitude, reaction force components, reaction force magnitude, reaction moment components, reaction moment magnitude, internal force components, internal force magnitude, internal moment components, internal moment magnitude, Von Mises equivalent stress, signed von Mises equivalent stress, maximum principal stress, minimum principal stress, Neuber equivalent stress, Glinka equivalent stress, Neuber equivalent strain, Glinka equivalent strain, Plastic strain magnitude, Neuber equivalent plastic strain, Glinka equivalent plastic strain, stress and strain based failure criteria, global stiffness measure, eigenfrequency, displacement components, displacement magnitude, rotation components, rotation magnitude, translational velocity components, translational velocity magnitude, rotational velocity components, rotational velocity magnitude, translational acceleration components, translational acceleration magnitude, rotational acceleration components, rotational acceleration magnitude, reaction force components, reaction moment components, and rate of internal work.

The optimization problem may for example consist in optimizing any one of the above examples of performance indicators, the indicator to be optimized being modeled by an objective function taking as input the CAD parameters which describe the beads (e.g. the positions of the extremal points of the beads' midlines). The optimization problem may have geometrical constraints on bead heights, bead widths, and/or bead overlaps..

Further to the providing of the inputs (that is, the CAD model and the optimization program), the method comprises modifying the initial value of the one or more CAD parameters. The modification of the initial value of the one or more CAD parameters may be referred to as the optimization of the one or more CAD parameters. Indeed, this step finds or tends to find the value(s) of the one or more CAD parameters, which are free variables of the optimization, that optimize the one or more objective function(s) and/or that fulfill the one or more constraints. Modifying the initial values thus consist in an optimization that solves the optimization program, i.e. that runs the optimization algorithm of the optimization program to solve the underlying optimization problem.

The bead optimization uses a gradient-based bead optimization method, as previously discussed. The optimization method has as free variables the one or more CAD parameters of which values are to be modified to perform the optimization (for example, the previously discussed bead CAD parameters which describe the beads), and uses sensitivities of the performance indicators with respect to these variables (i.e. derivatives approximations) to perform the optimization, since the method is gradient-based, as known *per se* in the field of optimization. The sensitivities may also be referred to as "gradients". In other words, the CAD parameters are the free variables of the optimization that the optimization method can modify (i.e. the optimization can modify the values of the CAD parameters) to optimize the performance indicators, and the sensitivities correspond to partial derivatives of the indicators to optimize with respect to the free variables. Each sensitivity is an approximation of a respective derivative of a respective performance indicator with respect to a respective CAD parameter. For each respective performance indicator, and each respective CAD parameter, there may be a respective sensitivity that is an approximation of the derivative of the respective performance indicator with respect to the respective CAD parameter. The sensitivities may be any suitable approximation of the respective derivatives. The method may include, prior to the optimization, a step of computing the sensitivities and/or the performance indicators.

The sensitivities may be compositions of:

- approximated respective derivatives each of a respective performance indicator with respect to a bead pattern nodal positions of a shell mesh of the part,
- approximated respective derivatives each of the nodal positions with respect to a geodesic signed distance field on the part, the geodesic signed distance field being a distribution of geodesic signed distances (i.e. signed geodesic distances) of nodes to the bead pattern on the part, and
- approximated respective derivatives each of the geodesic signed distance field with respect to a respective CAD parameter of a CAD definition of the bead pattern of the part.

The shell mesh of the part is any suitable mesh that discretizes a 3D spatial region encompassing a 3D geometrical representation of the part. The shell mesh thus discretizes the spatial region as well as the geometrical representation of the part. The geometrical representation of the part may be any suitable representation, such as a B-rep generated by executing the feature tree of the CAD model of the part, or any suitable CAE model obtained from the CAD model by any suitable CAD to CAE conversion process. The mesh thus comprises elements, which are the elements of the discretization. The elements may be squares, rectangles, cubes or cuboid rectangles if the mesh is a rectangular or cuboid mesh. The elements may be triangles or tetrahedrons if the mesh is a triangular or tetrahedral mesh. For example, the elements may be in large part triangles or quadrilaterals, linear or higher order, an outside the bead area other elements can be used (e.g. solid or bead elements). The mesh may be a finite element model (CAE model) with finite elements. A node of the shell mesh refers to the interconnection between two adjacent elements of the mesh. All of these concepts relate to meshing and finite element meshing and are known *per se.* The bead pattern nodal positions are the set of positions, defined with respect to the mesh nodes, of the beads of part, which are arranged as a bead pattern (e.g. rectangular pattern or circular pattern). The method may comprise a step of providing the shell mesh, for example before the optimization, which may comprise creating the shell mesh or retrieving/downloading an already created shell mesh. The set of all the nodal positions may be referred to as "the nodal field".

The geodesic signed distance field a distribution of signed geodesic distances on the part. In other words, the geodesic signed distance field is a distribution of signed values of a geodesic distance on the part, each value being a value of the geodesic distance of a respective mesh node to the bead pattern. The geodesic signed distance field may be later referred to simply as "signed distance field". The concept of geodesic distance is known *per se.* Here the geodesic distance is a geodesic distance defined on the surface of the part (or of a geometric representation thereof). It refers to the geodesic distance respective to the surface (e.g. manifold) of the sheet part in the shell mesh. Each value of the geodesic signed distance field is the *(i.e.* positive) distance of the respective mesh node if the mesh node is outside the bead pattern, or the opposite of this distance if the node is inside the bead pattern. The opposite convention may alternatively be used (i.e. negative value for a node outside, positive value for a node inside). The geodesic signed distance field is particularly adapted in the case where the sheet part is a curved sheet part, which is often the case in mechanical design of sheet parts and in the industries where they are used. The use of other distances, for example the Euclidean distance, could create numerical problems. When the sheet part is curved, its discrete representation in the shell mesh is a curved surface (e.g. manifold), on which the shortest distance between two points is the geodesic distance adapted to this manifold. Such distance provides an accurate and reliable distance field of distance values of nodes to the beads.

The CAD definition of the bead pattern is a set of one or more CAD features of the CAD model that define the bead pattern on the part. These one or more CAD features each comprise one or more CAD parameters. Such CAD parameters may for example consist in the set of the beads' midlines extremal points as previously discussed.

The nodal positions may correspond to a translation of the nodes of the shell mesh by a vector field that corresponds to the normals of the nodes multiplied by a bead scaling which depends on the geodesic signed distance field (i.e. the vector field corresponds to a scalar field *(i.e.* a scalar bead scaling field) dependent on the geodesic distance field multiplied with the node normals). This means that the nodal positions of the bead pattern are the result of the translation of the mesh nodes by the vector field formed by the distribution of the nodes normals, the vector field being multiplied by a bead scaling which depends on the geodesic signed distance field. In other words, the nodal positions of the bead pattern are the result of the translation of the mesh nodes by the vector field formed by a scalar bead scaling field which is dependent on the geodesic distance field, multiplied with the node normals. The bead scaling is any suitable scaling that transform the geodesic signed distance field distribution into bead pattern shape of the part. The bead scaling may be based on a projection by a smooth and differentiable function mapping $\mathbb{R}$ onto [0,1], for example a smooth Heaviside projection. For example the projection may be a smooth Heaviside function applied to a difference between the bead with of the bead pattern and the signed distance field.

The nodal positions $X(r_m)$ may defined by the following formula:

$$X(r_m) = X_0 + h(b_h, b_w, r_m)n = X_0 + b_h h\left(\frac{b_w - GSDF(r_m)}{2b_w}\right)n$$

where $r_m$ is a parameterization of the bead pattern on the mesh, $b_h$ is a height of the bead, $b_w$ is a width of the bead, h is the smooth and differentiable function mapping $\mathbb{R}$ onto [0,1], $X_0$ represents the positions of the nodes of the shell mesh *(i.e. $X_0$* is the set of the nodes), and n represents the normals of these nodes *(i.e. n* is the set of the nodes' normals). $r_m$ may be the set of extremal points *(i.e.* ending points) of the beads' midlines.

h may be a smooth Heaviside function H, which may be any smooth Heaviside function, for example any smooth Heaviside function discussed in https://en.wikipe-dia.org/wiki/Heaviside step function. For example, the smooth Heaviside function H may be:

$$H(x) = \frac{1}{2} + \frac{1}{2}\tanh(\alpha x \pi)$$

where *x* is the field the smooth Heaviside function acts on and $\alpha$ is a constant used to control the sharpness of the beads.

Each respective approximated derivative $\frac{\delta GSDF_i}{\delta r_m}$ of the geodesic signed distance field with respect to a respective CAD parameter $r_m$ *(i.e.* which is a free variable, for example a CAD parameter of the bead pattern) may be of the type:

$$\frac{\delta GSDF_i}{\delta r_m} \cong \frac{GSDF_i(r_m + h_m) - SGDF_i(r_m - h_m)}{2h_m},$$

$\forall i \in \omega, m \in \Omega_{param}$, where $GSDF_i$ is the geodesic signed distance field for mesh node position i, where $\Omega_{param}$ is a set of the CAD parameters, and where $h_m > 0$ is a small perturbation. In other words, a finite differences scheme may be used. In that respect, it is to be noted that, by definition, the signed distance changes linearly as one moves away from the closest point to the surface parametric feature. Therefore, a finite differences scheme proves very reliable at capturing the first order derivatives of the GSDF. The above formulation uses a centered finite difference scheme, but other finite difference schemes would also be applicable. Additionally, as the present finite difference is strictly a geometrical process then the computational costs are low also for the case of having many CAD parameters as design variables.

Each sensitivity $\frac{\delta KPI_n}{\delta r_m}$ may be of the type:

$$\frac{\delta KPI_n}{\delta r_m} = \sum_{i \in \omega} \frac{\delta KPI_n}{\delta X_i} \frac{\delta X_i}{\delta GSDF_i} \frac{\delta GSDF_i}{\delta r_m},$$

$\forall n \in \Omega_{score}, m \in \Omega_{param}$ where $GSDF_i$ is the signed distance field for mesh node position i, where $\Omega_{param}$ is a set of the CAD parameters, where $r_m$ is the respective CAD parameter, where $X_i$ is the mesh node position i, where $KPI_n$ is the respective performance indicator, and where $\Omega_{score}$ is the set of performance indicators. $\frac{\delta X_i}{\delta GSDF_i}$ may be computed as follows:

$$\frac{\delta X_i}{\delta GSDF_i} = \frac{-b_h}{2b_w} h'\left(\frac{b_w - GSDF_i}{2b_w}\right) n$$

where h' is the derivative of h and may be evaluated analytically.

The method may comprise, prior to solving the optimization program, computing the sensitivities. Computing the sensitivities may comprise the following steps:

- computing the shell mesh, by discretizing/meshing the spatial region encompassing the part or a geometrical representation thereof (e.g. a B-rep obtained from a feature tree);
- computing the geodesic signed distance field by computing the distribution of signed distance values on the nodes of the shell mesh;
- computing the approximated derivatives of the signed distance field with respect to the CAD parameters, for example according to the previously-discussed formula

$$\frac{\delta GSDF_i}{\delta r_m} \cong \frac{G\,SDF_i(r_m + h_m) - GSDF_i(r_m - h_m)}{2h_m},$$

$\forall i \in \omega, m \in \Omega_{param}$;
- computing the nodal positions, for example using the previously-discussed formula

$$X(r_m) = X_0 + h(b_h, b_w, r_m)n = X_0 + b_h h\left(\frac{b_w - GSDF(r_m)}{2b_w}\right)n;$$

- computing the approximated derivatives of the nodal positions with respect to the geodesic signed distance field, for example using the previously-discussed formula

$$\frac{\delta X_i}{\delta GSDF_i} = \frac{-b_h}{2b_w} h' \left( \frac{b_w - GSDF_i)}{2b_w} \right) n;$$

- evaluating the performance indicator(s) on the nodal positions;
- computing the approximated derivatives of the performance indicators with respect to the nodal positions;
- computing the sensitivities, for example using the previously discussed formula

$$\frac{\delta KPI_n}{\delta r_m} = \sum_{i \in \omega} \frac{\delta KPI_n}{\delta X_i} \frac{\delta X_i}{\delta GSDF_i} \frac{\delta GSDF_i}{\delta r_m},$$

$\forall n \in \Omega_{score}, m \in \Omega_{param}$.

Evaluating the performance indicator(s) on the nodal field (i.e. the field of the nodal positions) may be carried out by any suitable method known in the art, for example using Finite Element Analysis for calculating the physical KPIs and using Computational Geometry of the Finite Element Model for calculating geometrical KPIs. For example:

$$KPI_n(X) = \begin{cases} Finite\ Element\ Analysis\ for\ physical\ KPI \\ Computational\ Geometry\ for\ geometrical\ KPI \end{cases},$$

$\forall n \in \Omega_{score}$.

Computing the approximated derivatives of the performance indicators with respect to the nodal field may be performed as known in the art, for example using adjoint analysis for physical KPI and using analytical derivation for geometrical KPI. For example:

$$\frac{\delta KPI_n}{\delta X_i} = \begin{cases} Adjoint\ sensitivity\ analysis\ for\ physics\ KPI \\ Analytical\ derivation\ for\ geometry\ KPI \end{cases},$$

$\forall n \in \Omega_{score}, i \in \omega$

The evaluation of the performance indicators and the computation of the approximated derivatives of these indicators with respect to the nodal field by the above-discussed examples of methods (Finite Element Analysis, Computational geometry, Adjoint sensitivity, and Analytical derivation) are methods known *per se* in the field of shape optimization, and that are discussed in references - Tortorelli, D. A. and Michaleris, P. (1994), "Design sensitivity analysis: Overview and review", Inverse Problems in Engineering 1: 71-105, Le, C., Bruns, T., & Tortorelli, D. (2011), "A gradient-based, parameter-free approach to shape optimization", Computer Methods in Applied Mechanics and Engineering, 200(9-12), 985-996, and Bletzinger, K., Firl, M., Daoud, F., "Approximation of Derivatives in Semi-Analytical Structural Optimization", Computers & Structures 86, pp 1404-1416, 2007., which are all incorporated herein by reference.

An implementation of the method is now discussed. The implementation may be incorporated in the optimization loop flowchart illustrated on FIG. 3. This flowchart implements the following steps:

(a) First, a CAD model is provided as an input. This CAD model contains certain parameters of interest which will be optimized by the implementation;
(b) Then, the implementation determines a new representation of the CAD model for simulation upon which KPIs are evaluated;
(c) Afterwards, the implementation estimates derivatives of the KPIs with respect to the CAD parameters;
(d) Finally, the derivatives are used by a gradient-based optimization scheme to update the CAD parameters, thereby improving the CAD model.

Mathematically, this can be expressed by the KPI scores being a function of the CAD parameters:

$$KPI_n(r_m)$$

$\forall n \in \Omega_{score}, m \in \Omega_{param}$ where $\Omega_{score}$ is the set of KPI scores considered for a given optimization problem (i.e. physical or/and geometrical KPIs applied for objectives/constraints) and $\Omega_{param}$ is the set of CAD parameters being optimized (i.e. the high-level design variables).

Additionally, the implementation provides a method to evaluate the derivatives of the KPIs with respect to the CAD parameters:

$$\frac{\delta KPI_n}{\delta r_m}$$

$\forall n \in \Omega_{score}, m \in \Omega_{param}.$

These derivatives enable the employment of efficient gradient-based optimization schemes (e.g. Gradient descent, or more advanced schemes such as the Method of Moving Asymptotes).

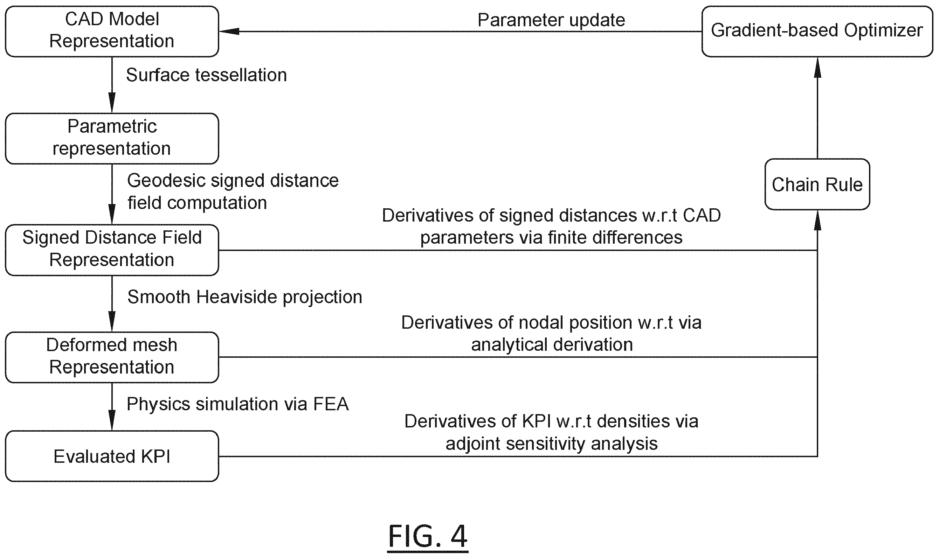

The implementation follows the workflow illustrated by the flowchart shown on FIG. 4. The steps of this workflow are now discussed.

**Step 1.** The implementation comprises discretizing the spatial region encompassing the CAD model into a mesh of shell elements (also referred to as "shell mesh"). Using a parametric representation of the feature (e.g. a bead) to be changed, the implementation calculates the geodesic signed distance field on the surface mesh of this parametric feature representation.

For each node, the implementation evaluates its distance to the parametric bead feature. This distance value is signed, indicating if the node is inside or outside the parametric feature. By convention a negative distance indicates a node inside the parametric feature. The calculated Geodesic Signed Distance Field (GSDF) is a function of the parametric feature (r) parameters as follows:

$$GSDF_i(r),$$

$\forall i \in \omega$ where $\omega$ is the set of node positions for the given discretization (i.e. the low-level variables).

**Step 2.** The implementation evaluates the derivatives of the GSDF with respect to the parametric feature using a finite differences scheme. This is achieved by sequentially applying a small perturbation $h_m$ to each CAD parameter and observing the impact on the GSDF values as follows:

$$\frac{\delta GSDF_i}{\delta r_m} \cong \frac{GSDF_i\left(r_m + \frac{h_m}{2}\right) - GSDF_i\left(r_m - \frac{h_m}{2}\right)}{h_m},$$

$\forall i \in \omega, m \in \Omega_{param}$

By definition, the signed distance changes linearly as one moves away from the closest point to the surface parametric feature. Therefore, a finite differences scheme proves very reliable at capturing the first order derivatives of the GSDF. The above formulation uses a centered finite difference scheme, but other finite difference schemes would also be applicable. Additionally, as the present finite difference is strictly a geometrical process then the computational costs are low also for the case of having many CAD parameters as design variables.

**Step** 3. The implementation transforms the GSDF into the nodal positions (X(r)) by the following equation

$$X(r) = X_0 + h(b_h, b_w, r)n = X_0 + b_h h\left(\frac{b_w - GSDF(r)}{2b_w}\right)n$$

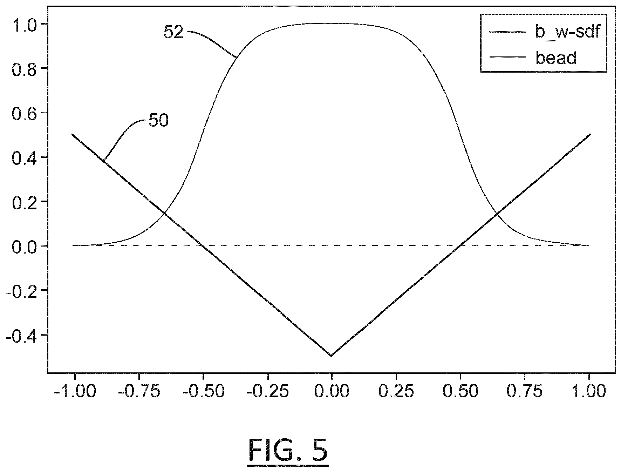

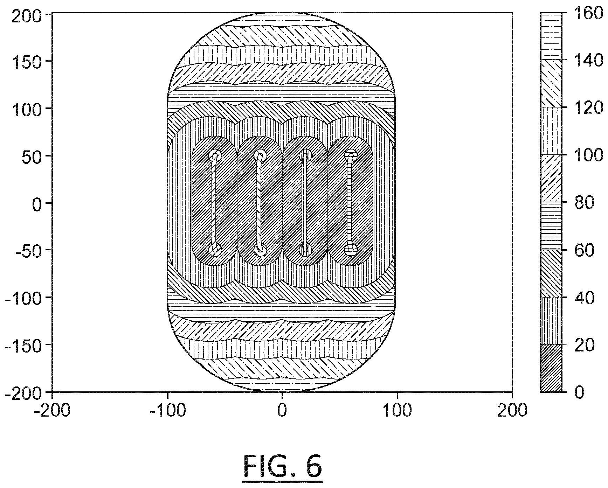

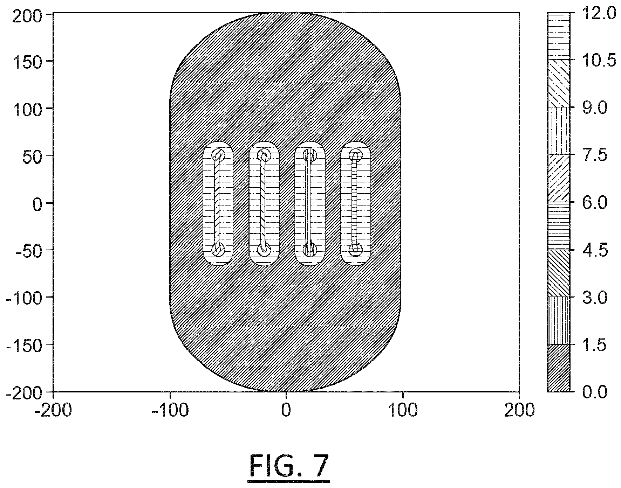

This step is illustrated on FIG.s 5 to 7. On FIG. 5, the linear curve 50 below is the GSDF, and the bead nodal deformation correspond to the other curve 52. FIG. 6 shows the 4 parametric lines which define the beads and the GSDF from this parametric representation. When a bead width and a bead height is added, one can calculate the nodal deformation shown on FIG. 7.

In general, this is not the only way a shape/feature could be interpreted. For beads the implementation could alternatively define every bead single thru and polygon with 4 points or more points, thus not needing a bead width anymore, but still a bead height. Another parametrization would be a circular bead. Examples of the feature parametrizations are shown on FIG.s 8 and 9. Bead could also be defined using splines/NURBS or other CAD features on a surface.

**Step 4.** The implementation then evaluates each KPI based on the nodal field, for example using finite element analysis for calculating the physical KPIs and using computational geometry of the finite element model for calculating geometrical KPIs. The implementation thereby obtains:

$$KPI_n(X) = \begin{cases} Finite\ Element\ Analysis\ for\ physical\ KPI \\ Computational\ Geometry\ for\ geometrical\ KPI \end{cases}'$$

$\forall n \in \Omega_{score}$

**Step** 5. The implementation then efficiently calculates the derivatives of the KPIs with respect to the nodal field (X) using adjoint analysis for physical KPI and using analytical derivation for geometrical KPI. The implementation thereby obtains:

$$\frac{\delta KPI_n}{\delta X_i} = \begin{cases} Adjoint\ sensitivity\ analysis\ for\ physics\ KPI \\ Analytical\ derivation\ for\ geometry\ KPI \end{cases}'$$

$\forall n \in \Omega_{score}, i \in \omega$

Step 6. The implementation then combines the derivatives computed in steps 2, 3 and 6 are combined using the chain rule to calculate the derivatives of the KPIs with respect to the CAD parameters as follows:

$$\frac{\delta KPI_n}{\delta r_m} = \sum_{i \in \omega} \frac{\delta KPI_n}{\delta X_i} \frac{\delta X_i}{\delta GSDF_i} \frac{\delta GSDF_i}{\delta r_m},$$

$\forall n \in \Omega_{score}, m \in \Omega_{param}$, where

$$\frac{\delta X_i}{\delta GSDF_i} = \frac{-b_h}{2b_w} h'\left(\frac{b_w - GSDF_i}{2b_w}\right) n$$

and where the derivative h' of h can be calculated analytically.

These derivatives can then be applied in an iterative gradient-based optimization scheme for completing an optimization loop having CAD parameters as design variables.

It is now discussed an example of use of the method.

The optimization in this example aims at determining the best bead pattern for improving the first eigenfrequency $\Phi$ with respect to a bead parametrization $r_i$ which contains the positions of the end points of the midline of the beads (P1, P2, ...,PN), as illustrated on FIG. 10, which shows a screenshot of the bead CAD model on the CATIA software.

Any other design response that the finite element solver support adjoint sensitivity calculations of (e.g. stiffness, displacements, stresses, reaction forces) can be chosen, but in the present example structural model eigenvalues are chosen as they are a typical maximization target for bead optimization applications.

The optimization formulation is:

$$\min \Phi(r_i)$$

Subject to:

$$-100 < r_i < 100$$

$$b_w = 10$$

$$b_h = 12.$$

The bead width and bead height are kept constant.

Using the method to do the chain-rule and sensitivity calculation, a mathematical optimizer (steepest decent) is used to find the maxima. Other more advanced optimizers (e.g. Method of Moving Asymptotes (MMA) or similar) could be used, for example to add more constraints or use minimax formulations.

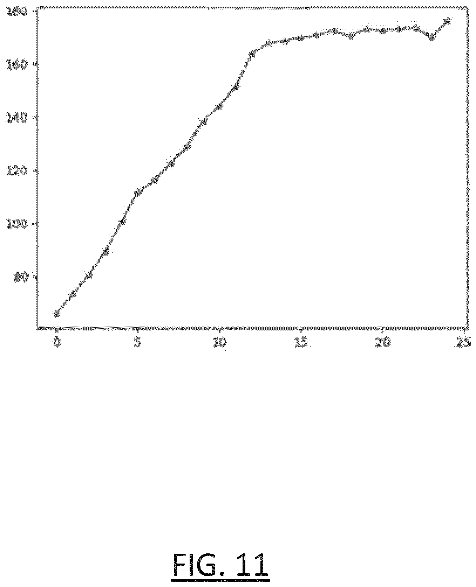

FIG. 11 illustrates that the convergence is fairly good and the first eigenvalue is increased from 66 Hz to 175 Hz. FIG.s 12-13 illustrate the implicit field describing the beads in initial state and in final state. FIG.S 14-15 illustrate the beads in initial state and final state in the finite element mesh representation.

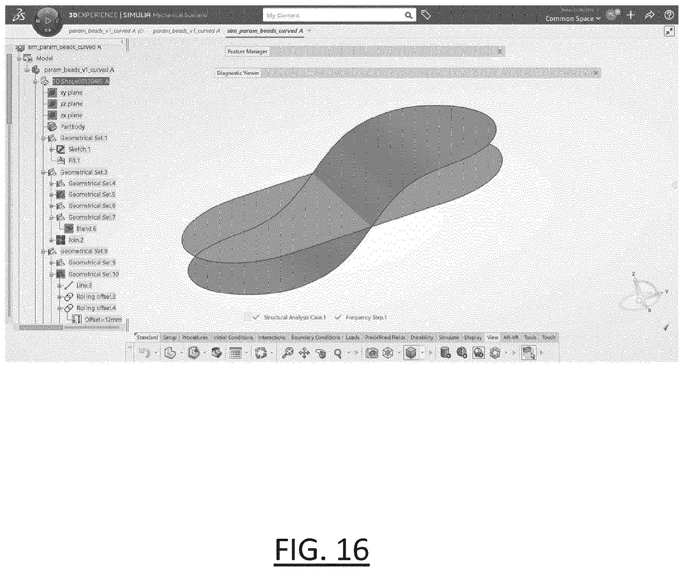

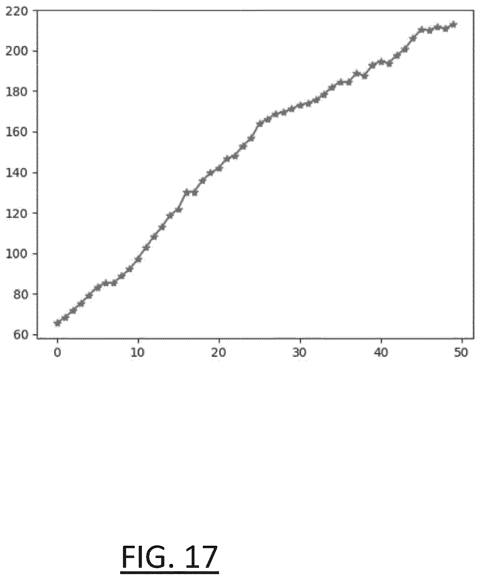

Another example of use is now discussed. This example replicates the previous example with a curve plate, as illustrated on FIG. 16 which shows a screenshot of a CAD model of the plate on the CATIA software. There is again a parametric representation of 4 beads and the optimization maximizes the first eigenvalue. FIG. 17 illustrates that the convergence is fairly good and the first eigenvalue is increased from 66 Hz to 213 Hz. FIG.s 18-19 show the implicit fields of initial and final state, seen from above. FIG.s 20-21 show the finite element representation of initial and final state.

The method generally manipulates modeled objects, such as the CAD model provided and optimized in the method. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below. In the case of the method, the object being designed is a CAD object, although it may possible stem from a CAE object as previously discussed and may possibly be converted into a CAM object further to the method, as further discussed hereinafter.

By CAD solution (e.g. a CAD system or a CAD software), it is additionally meant any system, software or hardware, adapted at least for designing a modeled object on the basis of a graphical representation of the modeled object and/or on a structured representation thereof (e.g. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

The modeled object designed by the method is a CAD model, comprising a feature tree and/or a B-rep. Such a model may stem from a CAE model and may results from a CAE to CAD conversion process, that the method may for example comprise at an initial stage.

The CAD model involved in the method is feature-based (i.e. it comprises a feature tree, and may optionally comprise a corresponding B-rep obtained by executing the feature tree). A feature-based 3D model allows (e.g. during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object designed/processed/outputted by the method. The production process may comprise the following steps:

- (e.g. automatically) applying the method, thereby obtaining the CAD model outputted by the method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise the following steps:

- editing the obtained CAD model;
- performing simulation(s) based on the CAD model or on a corresponding CAE model (e.g. the CAE model from which the CAD model stems, after a CAE to CAD conversion process), such as simulations for validation of mechanical, use and/or manufacturing properties and/or constraints (e.g. structural simulations, thermodynamics simulation, aerodynamic simulations);
- editing the CAD model based on the results of the simulation(s);
- (i.e. depending on the manufacturing process used, the production of the mechanical product may or may not comprise this step) (e.g. automatically) determining a manufacturing file/CAM file based on the (e.g. edited) CAD model, for production/manufacturing of the manufacturing product;
- sending the CAD file and/or the manufacturing file/CAM file to a factory; and/or
- (e.g. automatically) producing/manufacturing, based on the determined manufacturing file/CAM file or on the CAD model, the mechanical product originally represented by the model outputted by the method. This may include feeding (e.g. automatically) the manufacturing file/CAM file and/or the CAD file to the machine(s) performing the manufacturing process.

This last step of production/manufacturing may be referred to as the manufacturing step or production step. This step manufactures/fabricates the part based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more molding steps, one or more machining steps (e.g. milling steps), one or more bending step and/or one or more punching steps. The sheet part may for example be a sheet metal part, and the manufacturing step of this part further to its design by the method may comprise a step of stamping or deep drawing to obtain the sheet metal piece and one or more subsequent steps of bending to create the beads. Because the design method improves the design of a model (CAD) representing the part, the manufacturing and its productivity are also improved.

Editing the CAD model may comprise, by a user *(i.e.* a designer), performing one or more of the CAD model, e.g. by using a CAD solution. The modifications of the CAD model may include one or more modifications each of a geometry and/or of a parameter of the CAD model. The modifications may include any modification or series of modifications performed on a feature tree of the model (e.g. modification of feature parameters and/or specifications) and/or modifications performed on a displayed representation of the CAD model (e.g. a B-rep). The modifications are modifications which maintain the technical functionalities of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (e.g. automatically) determining a production file from the CAD model (e.g. any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compassworld/rootroles/nc-mill-turn-machine-programmer, and/or
- The Powder Bed Machine Programmer of Dassault Systèmes illustrated on https://my.3dexperience.3ds.com/welcome/fr/compassworld/rootroles/powder-bed-machine-programmer.

The sheet part may be a sheet metal part, as previously said. Such a part may be manufactured by stamping. The production process may in this case comprise (e.g. automatically) determining a CAM file based on the CAD model optimized by the method. This CAD model represents the stamping part, e.g. possible with one or more flanges if the part is to comprise some, and possibly in this latter case with extra material to be removed so as to form an unfolded state of one or more flanges of the part, as known per se from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length. The CAD model as outputted by the method also comprises one or more optimized CAD features and/or parameters defining an optimal (i.e. with respect to the optimization problem solved by the method) positioning and layout of the beads.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. This may include determining the radius, width and/or height of one or more upper stamping dies based on the optimized CAD parameters representing the optimized bead pattern. In other words, determining the CAM file may comprise determining (e.g. automatically), based on the optimized CAD bead parameters, the shape of the upper stamping die(s) that are to form the beads as optimized by the method by punching the sheet metal part so as to bend it to form the beads. If the CAD model also comprises the representation of the extra material to be removed so as to form an unfolded state of one or more flanges of the part, the extra material to be removed may for example be cut by machining, and determining the CAM file may also comprise determining a corresponding machining CAM file. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, e.g. directly and automatically, the CAM file, and perform the stamping process (e.g. automatically) based on the file. The stamping process may comprise stamping (e.g. punching) a portion of material to form the product as represented by the CAD file, that is possibly with the unfolded flanges and the extra material (if any). The punching notably includes punching the sheet metal part against the appropriate upper stamping dies to bend the metal so as to form the beads. Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 22 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or objectoriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for designing a sheet part comprising beads, the method comprising:

   - providing:

       ∘ a CAD model representing the part, the CAD model including a feature tree having one or more CAD parameters each having an initial value, and
       ∘ a bead optimization program specified by one or more use and/or manufacturing performance indicators, the one or more indicators comprising one or more objective function(s) and/or one or more constraints; and

   - modifying the initial values of the one or more CAD parameters by solving the optimization program using a gradient-based bead optimization method, the optimization method having as free variables the one or more CAD parameters, the optimization method using sensitivities, each sensitivity being an approximation of a respective derivative of a respective performance indicator with respect to a respective CAD parameter.

2. The method of claim 1, wherein the sensitivities are compositions of:

   - approximated respective derivatives each of a respective performance indicator with respect to a bead pattern nodal positions of a shell mesh of the part,
   - approximated respective derivatives each of the nodal positions with respect to a geodesic signed distance field on the part, the geodesic signed distance field being a distribution of geodesic signed distances of nodes to the bead pattern on the part, and
   - approximated respective derivatives each of the geodesic signed distance field with respect to a respective CAD parameter of a CAD definition of the bead pattern of the part.

3. The method of claim 2, wherein the nodal positions correspond to a translation of the nodes of the shell mesh by a vector field that corresponds to the normals of the nodes multiplied by a bead scaling which depends on the geodesic signed distance field.

4. The method of claim 3, wherein the bead scaling is based on a projection by a smooth and differentiable function mapping $\mathbb{R}$ onto $[0,1]$.

5. The method of claim 4, wherein the nodal positions $X(r_m)$ are defined by the following formula:

$$X(r_m) = X_0 + h(b_h, b_w, r_m)n = X_0 + b_h h\left(\frac{b_w - GSDF(r_m)}{2b_w}\right)n$$

   where $GSDF$ is the geodesic signed distance field, $r_m$ is a parameterization of the bead pattern on the mesh, $b_h$ is a height of the bead, $b_w$ is a width of the bead, h is the smooth and differentiable function mapping $\mathbb{R}$ onto $[0,1]$, $X_0$ represents the positions of the nodes of the shell mesh, and n represents the normals of these nodes.

6. The method of claim 5, wherein h is a smooth Heaviside function.

7. The method of any one of claims 2 to 6, wherein each respective approximated derivative $\frac{\delta GSDF_i}{\delta r_m}$ of the geodesic signed distance field with respect to a respective CAD parameter $r_m$ is of the type:

$$\frac{\delta GSDF_i}{\delta r_m} \cong \frac{GSDF_i(r_m + h_m) - GSDF_i(r_m - h_m)}{2h_m},$$

   $\forall i \in \omega, m \in \Omega_{param}$, where $GSDF_i$ is the geodesic signed distance field for mesh node position i, where $\Omega_{param}$ is a set of the CAD parameters, and where $h_m > 0$ is a small perturbation.

8.

The method of any one of claims 2 to 7, wherein each sensitivity $\frac{\delta KPI_n}{\delta r_m}$ is of the type:

$$\frac{\delta KPI_n}{\delta r_m} = \sum_{i \in \omega} \frac{\delta KPI_n}{\delta X_i} \frac{\delta X_i}{\delta GSDF_i} \frac{\delta GSDF_i}{\delta r_m},$$

$\forall n \in \Omega_{score}$, $m \in \Omega_{param}$ where $GSDF_i$ is the signed distance field for mesh node position i, where $\Omega_{param}$ is a set of the CAD parameters, where $r_m$ is the respective CAD parameter, where $X_i$ is the mesh node position i, where $KPI_n$ is the respective performance indicator, and where $\Omega_{score}$ is the set of performance indicators.

9. The method of any one of claims 1 to 8, wherein the method comprises, prior to solving the optimization program, computing the sensitivities.

10. The method of any one of claims 1 to 9, wherein the sheet part is a curved sheet part.

11. A computer-program comprising instructions which, when the program is executed on a computer, cause the computer to carry out the method of any one of claims 1 to 10.

12. A computer-readable storage medium having recorded thereon the computer program of claim 11.

13. A system comprising a processor coupled to a memory, the memory having recorded thereon the computer program of claim 11.

## FIG. 1

20   22

## FIG. 2

CAD Model ←———— (d) Parameter update ————— Gradient-based Optimizer

(a)                                                                 (c)

Invention

(b)

Key Performance
Indicators (KPIs)

## FIG. 3

FIG. 4

EP 4 283 510 A1

**FIG. 5**

FIG. 6

FIG. 7

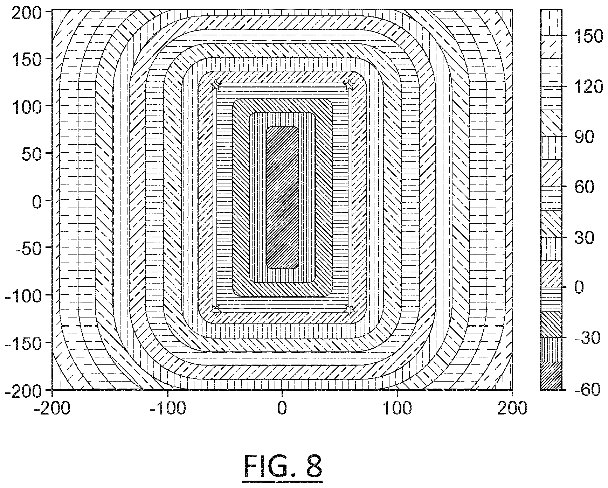

FIG. 8

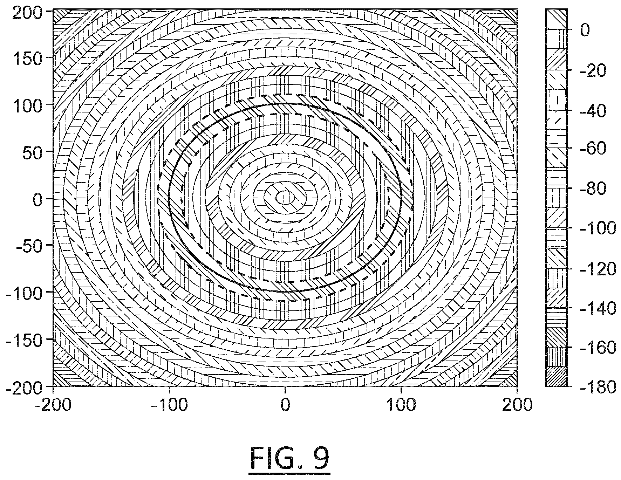

FIG. 9

FIG. 10

EP 4 283 510 A1

# FIG. 11

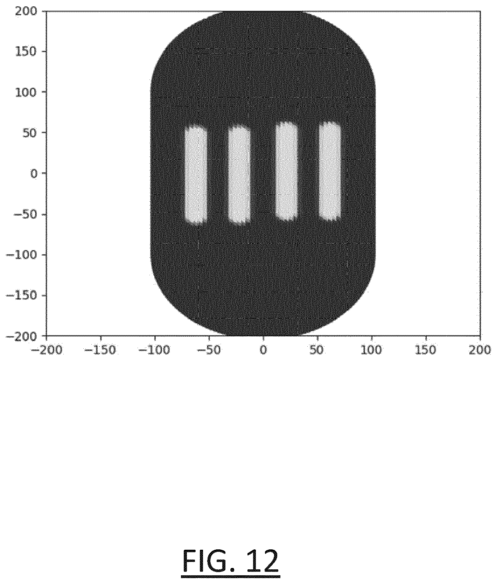

# FIG. 12

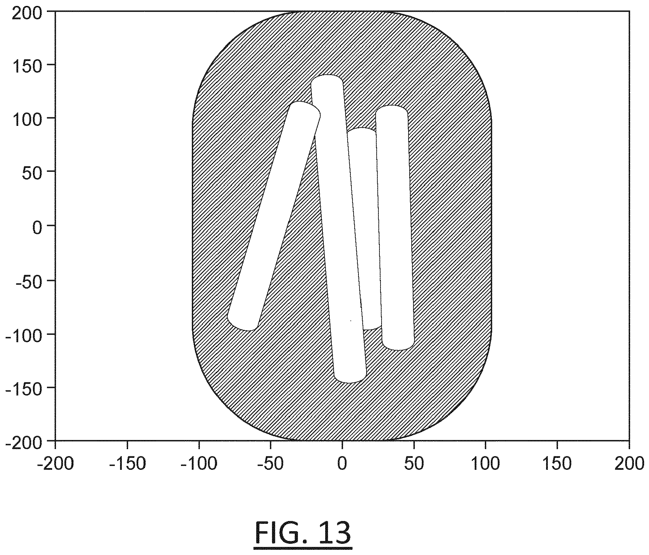

FIG. 13

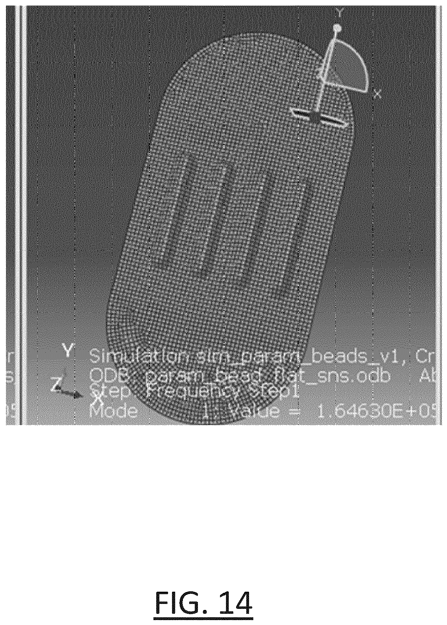

FIG. 14

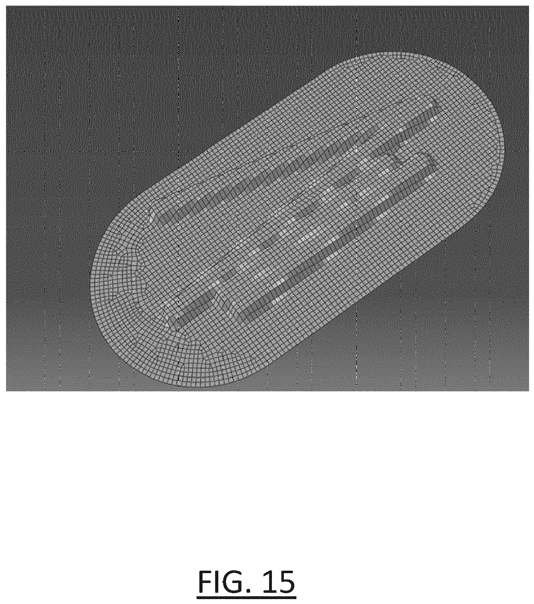

FIG. 15

EP 4 283 510 A1

FIG. 16

## FIG. 17

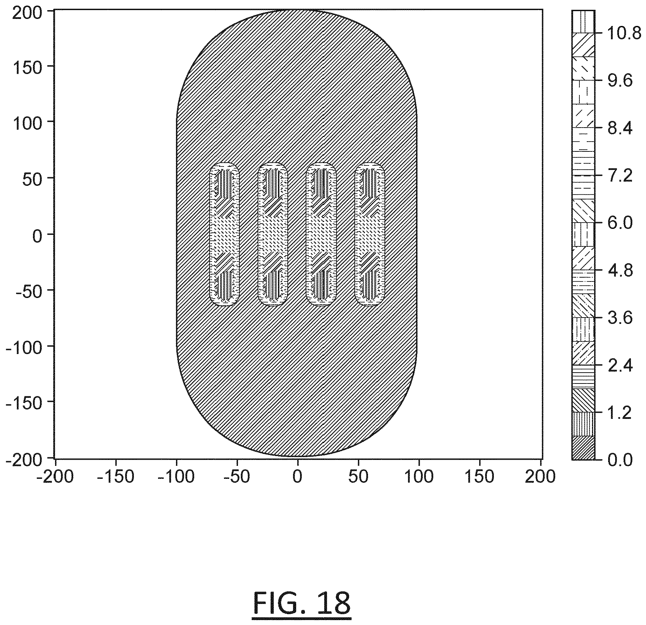

FIG. 18

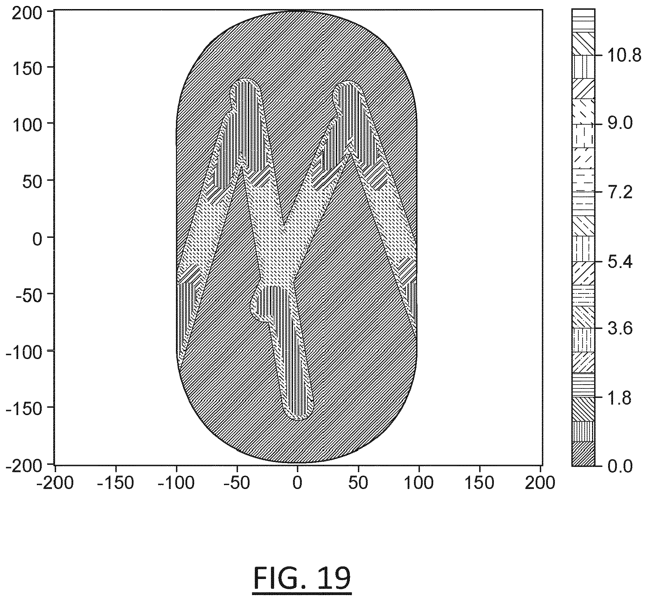

## FIG. 19

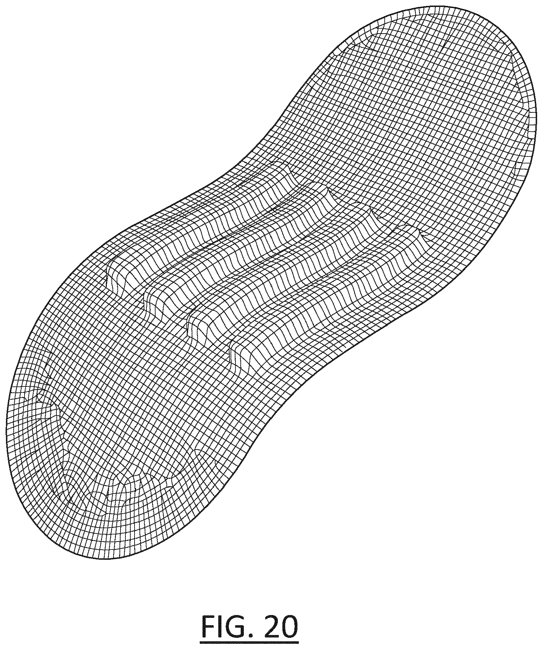

FIG. 20

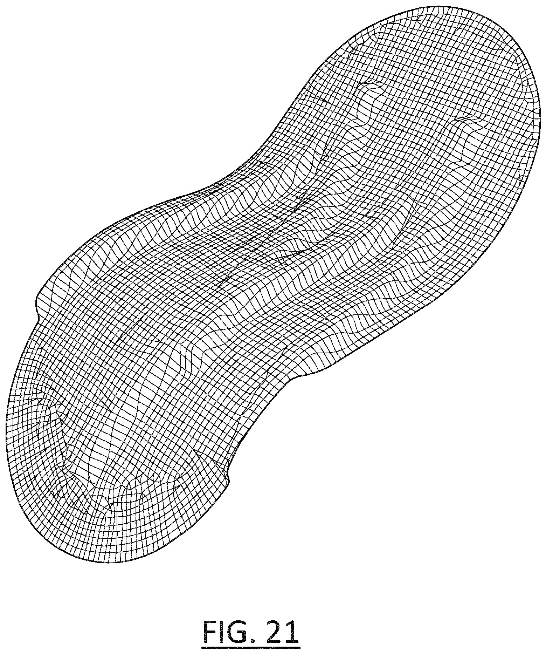

FIG. 21

## FIG. 22

Europäisches Patentamt

European Patent Office

Office européen des brevets

## EUROPEAN SEARCH REPORT

Application Number

EP 22 30 5786

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIENDL J ET AL: "Isogeometric shape optimization of shells using semi-analytical sensitivity analysis and sensitivity weighting", COMPUTER METHODS IN APPLIED MECHANICS AND ENGINEERING, vol. 274, 8 February 2014 (2014-02-08), pages 148-167, XP028641327, DOI: 10.1016/J.CMA.2014.02.001 * the whole document * * abstract * * figure 2 * * figures 8(a), 18 * * page 149, paragraph 4 * * page 152, paragraph 4 * * equation (21) * * page 152, paragraph 2 * ----- | 1-13 | INV. G06F30/10 G06F30/20 ADD. G06F113/24 G06F30/15 G06F30/17 |
| X | SHINTANI KOHEI ET AL: "A Design Method of Beads in Shell Structure Using Non-Parametric Shape Optimization Method", COMPUTERS AND INFORMATION IN ENGINEERING CONFERENCE IDETC/CIE, 17 August 2014 (2014-08-17), pages 1-8, XP093000428, DOI: 10.1115/DETC2014-34572 * the whole document * * abstract * * page 2, column 2 - page 3, column 1 * ----- -/-- | 1-13 | TECHNICAL FIELDS SEARCHED (IPC) G06F |

The present search report has been drawn up for all claims

| Place of search | Date of completion of the search | Examiner |
|---|---|---|
| Munich | 22 November 2022 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

**EP 22 30 5786**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UPADHYAY BHAVIK D. ET AL: "Numerical analysis perspective in structural shape optimization: A review post 2000", ADVANCES IN ENGINEERING SOFTWARE, vol. 155, 1 May 2021 (2021-05-01), page 102992, XP093000154, DOI: 10.1016/j.advengsoft.2021.102992 * the whole document * * abstract * * figure 2 * * table 5 * * secton 4 * | 1-13 | |
| X | SEHMI MANINDER ET AL: "Review of topology optimisation refinement processes for sheet metal manufacturing in the automotive industry", STRUCTURAL AND MULTIDISCIPLINARY OPTIMIZATION, vol. 58, no. 1, 2 January 2018 (2018-01-02), pages 305-330, XP036531392, DOI: 10.1007/S00158-017-1876-0 * the whole document * * abstract * * figure 3 * * figures 5,6,7 * * section 2.2.2 * * section 2.3 * | 1-13 | |

**TECHNICAL FIELDS SEARCHED (IPC)**

The present search report has been drawn up for all claims

| Place of search | Date of completion of the search | Examiner |
|---|---|---|
| Munich | 22 November 2022 | Rungger, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................................
& : member of the same patent family, corresponding document

EPO FORM 1503 03.82 (P04C01)

## REFERENCES CITED IN THE DESCRIPTION

**Non-patent literature cited in the description**

- **TORTORELLI, D. A. ; MICHALERIS, P.** Design sensitivity analysis: Overview and review. *Inverse Problems in Engineering,* 1994, vol. 1, 71-105
- **LE, C. ; BRUNS, T. ; TORTORELLI, D.** A gradient-based, parameter-free approach to shape optimization. *Computer Methods in Applied Mechanics and Engineering,* 2011, vol. 200 (9-12), 985-996
- **BLETZINGER, K. ; FIRL, M. ; DAOUD, F.** Approximation of Derivatives in Semi-Analytical Structural Optimization. *Computers & Structures,* 2007, vol. 86, 1404-1416